# EUROPÄISCHE PATENTSCHRIFT

(11) **EP 3 401 155 B1**
(45) Veröffentlichungstag und Bekanntmachung des Hinweises auf die Patenterteilung: **30.06.2021**
(21) Anmeldenummer: 18163251.4
(22) Anmeldetag: 22.03.2018
(51) Int. Cl.: B60L 53/31, B60L 53/65, B60L 53/30, B60L 53/66, B60L 53/68

(54) **VERFAHREN UND SYSTEM ZUM LÖSEN EINER VERSORGUNGSLEITUNG ZUR VERSORGUNG EINES FAHRZEUGS MIT ELEKTRISCHER ENERGIE**
METHOD AND SYSTEM FOR LOOSENING A SUPPLY LINE FOR SUPPLYING A VEHICLE WITH ELECTRICAL ENERGY
PROCÉDÉ ET SYSTÈME DE RÉGLAGE D'UN CÂBLE D'ALIMENTATION PERMETTANT D'ALIMENTER UN VÉHICULE EN ÉNERGIE ÉLECTRIQUE

(30) Priorität: 25.04.2017 DE 102017206959
(43) Veröffentlichungstag der Anmeldung: 14.11.2018
(73) Patentinhaber: AUDI AG, 85045 Ingolstadt (DE)
(72) Erfinder: Imberger, Jörg, 85049 Ingolstadt (DE)

(56) Entgegenhaltungen:
- EP-A2- 2 644 440
- WO-A2-2013/057587
- CN-A- 106 114 248
- US-A1- 2016 264 011

## Beschreibung

Die vorgestellte Erfindung betrifft ein Verfahren zum Lösen einer von einem Fahrzeug umfassten Verriegelung für eine Versorgungsleitung zur Versorgung des Fahrzeugs mit Energie und ein zur Durchführung des vorgestellten Verfahrens konfiguriertes System.

Zum Versorgen von Fahrzeugen mit insbesondere elektrischer Energie werden Versorgungsstationen eingesetzt, die eine Anzahl Versorgungsleitungen umfassen. Um ein jeweiliges Fahrzeug bspw. mit elektrischer Energie zu laden, wird eine Versorgungsleitung mit dem Fahrzeug verbunden und an dem Fahrzeug mittels einer Verriegelung fixiert. Da sich bspw. ein Ladevorgang für ein elektrisch angetriebenes Fahrzeug über einen langen Zeitraum erstrecken kann, wird sich ein Nutzer des Fahrzeugs häufig von dem Fahrzeug entfernen. Ohne einen Steuerbefehl zum Lösen der Verriegelung zum Fixieren der Versorgungsleitung kann die Versorgungsleitung jedoch nicht von dem Fahrzeug gelöst werden. Dies führt dazu, dass eine Situation entstehen kann, in der ein Fahrzeug bspw. voll geladen an einer Versorgungsstation steht und eine Versorgungsleitung, mittels derer ein weiteres Fahrzeug geladen werden könnten, so lange blockiert, bis ein Nutzer des Fahrzeugs zu dem Fahrzeug zurückkehrt und den Steuerbefehl zum Lösen der Verriegelung zum Fixieren der Versorgungsleitung bereitstellt.

In der deutschen Druckschrift DE 10 2011 010 809 A1 wird ein Verfahren zur Sicherung eines Ladevorgangs eines Elektrofahrzeugs offenbart, bei dem eine verriegelte Ladebuchse über ein Mobiltelefon entriegelt wird.

Die internationale Druckschrift WO 2013 137 029 A1 oder die chinesische Druckschrift CN 106 114 248 A offenbaren ein Ladesystem für ein Elektrofahrzeug mit einer Fernsteuerung zum Entriegeln einer Ladebuchse des Elektrofahrzeugs.

Eine Verriegelungsvorrichtung für eine Ladesteckdose eines Kraftfahrzeugs ist in der deutschen Druckschrift DE 10 2012 022 949 A1 offenbart.

Die europäische Druckschrift EP 2 644 440 A2 oder die amerikanische Druckschrift US 2016/264011 A1 offenbaren ein Verfahren zum Freigeben einer Versorgungsleitung, das auf einem Nachrichten-Austausch zwischen Nutzern basiert.

Vor diesem Hintergrund ist es eine Aufgabe der vorgestellten Erfindung, eine Möglichkeit zum Lösen einer Verriegelung für eine Versorgungsleitung eines Fahrzeugs durch eine Person bereitzustellen, die keine Berechtigung zum Bedienen des Fahrzeugs hat.

Zur Lösung der voranstehend genannten Aufgabe wird ein Verfahren zum Lösen einer von einem Fahrzeug umfassten Verriegelung für eine Versorgungsleitung zur Versorgung des Fahrzeugs mit Energie vorgestellt. Dazu ist vorgesehen, dass von einem anfragenden Nutzer mittels eines Senders eine Nachricht erzeugt und an eine tragbare Recheneinheit eines Nutzers des Fahrzeugs übermittelt wird. Weiterhin ist vorgesehen, dass mittels der Nachricht dem Nutzer des Fahrzeugs eine Option zum Erzeugen eines Steuerbefehls zum Lösen der Verriegelung bereitgestellt wird, und für den Fall, dass der Nutzer des Fahrzeugs die Option zum Erzeugen des Steuerbefehls zum Lösen der Verriegelung aktiviert, der Steuerbefehl zum Lösen der Verriegelung erzeugt und von der tragbaren Recheneinheit des Nutzers des Fahrzeugs an das Fahrzeug übertragen wird. Ferner ist vorgesehen, dass in Abhängigkeit eines Empfangs des erzeugten Steuerbefehls durch ein Steuergerät des Fahrzeugs die Verriegelung des Fahrzeugs gelöst wird, wodurch dem anfragenden Nutzer ein Lösen der Versorgungsleitung von dem Fahrzeug ermöglicht wird.

Ausgestaltungen der vorgestellten Erfindung ergeben sich aus der Beschreibung und den abhängigen Ansprüchen.

Das vorgestellte Verfahren dient insbesondere zum Verwalten eines Zugangs zu einer Versorgungsleitung einer Versorgungsstation zum Versorgen eines Fahrzeugs mit Energie. Gemäß dem vorgestellten Verfahren ist vorgesehen, dass eine Verriegelung, mittels derer die Versorgungsleitung an einem jeweiligen Fahrzeug fixiert und entsprechend zur Nutzung durch weitere Nutzer blockiert ist, in Abhängigkeit einer von einem potentiellen Nutzer der Versorgungsleitung, d. h. von einem anfragenden Nutzer, zu erzeugenden Nachricht von einem Nutzer des Fahrzeugs gelöst werden kann. Dazu ist gemäß dem vorgestellten Verfahren vorgesehen, dass von dem anfragenden Nutzer eine Nachricht erzeugt und an den Nutzer des Fahrzeugs übermittelt wird, die dem Nutzer des Fahrzeugs anzeigt, dass der anfragende Nutzer die Versorgungsleitung verwenden bzw. von dem Fahrzeug lösen möchte. Auf Grundlage der Nachricht kann der Nutzer des Fahrzeugs entscheiden, ob der die Verriegelung lösen und, dadurch bedingt, einen Vorgang zum Versorgen des Fahrzeugs mit Energie abbrechen möchte oder, ob er den Vorgang zum Versorgen des Fahrzeugs mit Energie fortsetzen und entsprechend die Anfrage ablehnen möchte.

Für den Fall, dass der Nutzer des Fahrzeugs einer jeweiligen Anfrage zum Lösen der Versorgungsleitung von dem Fahrzeug stattgeben möchte, ist gemäß dem vorgestellten Verfahren vorgesehen, dass der Nutzer des Fahrzeugs in Reaktion auf eine die Anfrage umfassende Nachricht die Verriegelung zum Fixieren der Versorgungsleitung an dem Fahrzeug mittels eines unter Verwendung seiner tragbaren Recheneinheit zu erzeugenden Steuerbefehls lösen kann. Entsprechend kann der Nutzer des Fahrzeugs seine tragbare Recheneinheit als Fernsteuerung zum Lösen der Verriegelung zum Fixieren der Versorgungsleitung verwenden.

Der Steuerbefehl zum Lösen der Verriegelung zum Fixieren der Versorgungsleitung an dem Fahrzeug kann von der tragbaren Recheneinheit des Nutzers, bspw. unter Verwendung einer Kommunikationsschnittstelle, wie bspw. einem Mobilfunknetzwerk, an das Fahrzeug übertragen werden.

Sobald der Steuerbefehl zum Lösen der Verriegelung von dem Fahrzeug empfangen wurde, wird der Steuerbefehl von einem Steuergerät des Fahrzeugs verarbeitet und die Verriegelung gelöst. Entsprechend kann der anfragende Nutzer die Versorgungsleitung von dem Fahrzeug lösen und die Versorgungsleitung bspw. mit seinem Fahrzeug verbinden.

Unter einer Versorgungsleitung ist im Kontext der vorgestellten Erfindung eine Leitung zu verstehen, durch die ein Fahrzeug mit Energie bzw. einem Energieträger zu versorgen ist. Insbesondere kann eine Versorgungsleitung ein Kabel zum Laden eines elektrischen Energiespeichers oder eine Kraftstoffleitung zum Versorgen eines Fahrzeugs mit Kraftstoff sein.

Unter einer tragbaren Recheneinheit ist im Kontext der vorgestellten Erfindung eine von einem Nutzer eines Fahrzeugs zu tragende Recheneinheit, wie bspw. ein Mobiltelefon oder ein Notebook zu verstehen.

Unter einer Option zum Erzeugen eines Steuerbefehls ist im Kontext der vorgestellten Erfindung eine Möglichkeit zum Aktivieren eines Vorgangs zum Erzeugen des Steuerbefehls zu verstehen. Eine solche Möglichkeit kann bspw. ein auf einem Touchscreen dargestelltes Steuerungssymbol oder ein Schalter, Taster bzw. jede weitere zum Aktivieren eines Vorgangs zum Erzeugen eines Steuerbefehls geeignete Benutzerschnittstelle sein.

In einer möglichen Ausgestaltung des vorgestellten Verfahrens ist vorgesehen, dass als der Sender zum Erzeugen der Nachricht ein von dem Fahrzeug umfasster Sender verwendet wird, der mittels eines an einer Außenhülle des Fahrzeugs angeordneten Bedienelements dazu konfiguriert wird, die erfindungsgemäß vorgesehene Nachricht zu erzeugen und die Nachricht an die tragbare Recheneinheit des Nutzers des Fahrzeugs zu übertragen.

Um die erfindungsgemäß vorgesehene Nachricht zu erzeugen und, dadurch bedingt, eine Anfrage an einen Nutzer eines Fahrzeugs zu übermitteln, kann jede zum Aktivieren eines Steuergeräts zum Erzeugen der Nachricht geeignete Benutzerschnittstelle verwendet werden. Insbesondere ist vorgesehen, dass ein an einem jeweiligen eine Versorgungsleitung blockierenden Fahrzeug angeordnetes Bedienelement, wie bspw. ein Schalter, Taster oder eine berührungsempfindliche Oberfläche betätigt bzw. berührt wird, um die erfindungsgemäß vorgesehene Nachricht zu erzeugen.

Es ist denkbar, dass eine in Reaktion auf eine Eingabe eines anfragenden Nutzers erzeugte Nachricht dem anfragenden Nutzer durch bspw. eine Statusleuchte rückgemeldet wird. Dazu kann die Statusleuchte bspw. aufleuchten, blinken oder ihre Leuchtfarbe ändern. Selbstverständlich kann auch jede weitere zum Bereitstellen einer Rückmeldung geeignete Einrichtung, wie bspw. ein Lautsprecher oder ein Vibrationselement verwendet werden, um dem anfragenden Nutzer eine erfolgreich an den Nutzer des Fahrzeugs bzw. an eine tragbare Recheneinheit des Nutzers des Fahrzeugs übermittelte Nachricht anzuzeigen.

Unter Verwendung eines an einem jeweiligen eine Versorgungsleitung blockierenden Fahrzeug angeordneten Bedienelements kann von einem zum Erzeugen der erfindungsgemäß vorgesehenen Nachricht vorgesehenen Sender auf einen Speicher des Fahrzeugs zugegriffen werden, um Verbindungsinformationen des Nutzers, wie bspw. eine Mobilfunknummer zu ermitteln.

In einer weiteren möglichen Ausgestaltung des vorgestellten Verfahrens ist vorgesehen, dass als der Sender zum Erzeugen der Nachricht eine tragbare Recheneinheit des anfragenden Nutzers verwendet wird. Dabei ist vorgesehen, dass der anfragende Nutzer mittels des Senders mindestens ein Identifikationsmerkmal des Fahrzeugs erfasst. Weiterhin ist vorgesehen, dass anhand des mindestens einen erfassten Identifikationsmerkmals auf Verbindungseinstellungen zum Übertragen der Nachricht an die tragbare Recheneinheit des Nutzers des Fahrzeugs geschlossen wird.

Um auf ein Bedienelement an einem jeweiligen Fahrzeug zu verzichten bzw. einem Nutzer eines Fahrzeugs, das kein Bedienelement aufweist, die erfindungsgemäß vorgesehene Nachricht bereitzustellen, kann es vorgesehen sein, dass eine tragbare Recheneinheit eines jeweiligen anfragenden Nutzers als Sender zum Erzeugen und Übertragen der erfindungsgemäß vorgesehenen Nachricht verwendet wird.

Um einer tragbaren Recheneinheit eines jeweiligen anfragenden Nutzers eine Verbindung zu einer tragbaren Recheneinheit eines Nutzer eines jeweiligen Fahrzeugs zu ermöglichen, kann vorgesehen sein, dass mittels der tragbaren Recheneinheit des anfragenden Nutzers ein Identifikationsmerkmal des Fahrzeugs, wie bspw. ein QR-Code oder ein RFID-Tag erfasst bzw. ausgelesen wird. Anhand des Identifikationsmerkmals können bspw. unter Verwendung einer auf einem Sever hinterlegten Zuordnungstabelle jeweilige Verbindungseinstellungen, d. h. bspw. eine Mobilfunknummer des Nutzers des Fahrzeugs, ermittelt und zum Übertragen der erfindungsgemäß vorgesehenen Nachricht an die tragbare Recheneinheit des Nutzers des Fahrzeugs verwendet werden.

In einer weiteren möglichen Ausgestaltung des vorgestellten Verfahrens ist vorgesehen, dass als der Sender ein an einer mit der Versorgungsleitung verbundenen Versorgungsstation angeordnetes Steuergerät verwendet wird.

Es kann vorgesehen sein, dass das Steuergerät der Versorgungsstation in Abhängigkeit einer Betätigung eines an der Versorgungsstation angeordneten Bedienelements über eine Kommunikationsschnittstelle mit dem Fahrzeug eine kommunikative Verbindung aufbaut, und von dem Steuergerät der Versorgungsstation Verbindungseinstellungen zum Übertragen der Nachricht an die tragbare Recheneinheit des Nutzers ermittelt werden. Entsprechend kann vorgesehen sein, dass unter Verwendung der Verbindungseinstellungen die Nachricht von der Versorgungsstation an die tragbare Recheneinheit des Nutzers des Fahrzeugs übermittelt wird.

Um einem potentiellen Nutzer einer Versorgungsstation, der keine tragbare Recheneinheit besitzt, um mit einem Nutzer eines Fahrzeugs, das eine Versorgungsleitung der Versorgungsstation blockiert, in Kontakt zu treten, eine Möglichkeit zum Lösen der Versorgungsleitung von dem Fahrzeug bereitzustellen, kann vorgesehen sein, dass die Versorgungsstation an sich verwendet wird, um dem Nutzer des die Versorgungsleitung blockierenden Fahrzeugs die erfindungsgemäß vorgesehene Nachricht zu übermitteln.

Zum Aufbau einer kommunikativen Verbindung zwischen einer jeweiligen Versorgungsstation und einer tragbaren Recheneinheit eines Nutzers eines Fahrzeugs, das eine Versorgungsleitung der Versorgungsstation blockiert, ist vorgesehen, dass die Versorgungsstation mittels eines Bedienelements, wie bspw. einem Taster, einem Schalter, einem berührungsempfindlichen Feld oder jeder weiteren zum Übermitteln eines Steuerbefehls geeigneten Benutzerschnittstelle zur Durchführung eines Anfrageprozesses konfiguriert wird. In Reaktion auf eine Eingabe zur Durchführung des Anfrageprozesses, d. h. bspw. in Reaktion auf einen Druck eines Tasters, verbindet sich ein Steuergerät der Versorgungsstation über eine Kommunikationsschnittstelle, wie bspw. ein WLAN-Netzwerk, mit mindestens einem über eine Versorgungsleitung mit der Versorgungsstation verbundenen Fahrzeug und ermittelt von dem Fahrzeug Verbindungseinstellungen, wie bspw. eine Mobilfunknummer zum Kontaktieren eines jeweiligen Nutzers eines jeweiligen Fahrzeugs. Unter Verwendung der jeweiligen Verbindungseinstellungen wird dem Nutzer des Fahrzeugs die erfindungsgemäß vorgesehene Nachricht übermittelt, woraufhin der Nutzer entscheiden kann, ob er die Verriegelung zum Fixieren der Versorgungsleitung an seinem Fahrzeug lösen möchte und mittels der Nachricht einen entsprechenden Steuerbefehl bereitstellt oder einen jeweiligen Versorgungsvorgang zum Versorgen des Fahrzeugs mit Energie fortführen möchte.

In einer weiteren möglichen Ausgestaltung des vorgestellten Verfahrens ist vorgesehen, dass die Verbindungseinstellungen zum Übertragen der Nachricht an die tragbare Recheneinheit des Nutzers des Fahrzeugs aus einem Speicher des Fahrzeugs ausgelesen werden.

Zur schnellen und einfachen Durchführung des vorgestellten Verfahrens kann ein Nutzer eines Fahrzeugs seine Verbindungseinstellungen in einem Speicher des Fahrzeugs hinterlegen und zur Durchführung des vorgestellten Verfahrens freigeben. Dabei kann selbstverständlich vorgesehen sein, dass die Verbindungseinstellungen in anonymisierter und/oder verschlüsselter Form in dem Speicher des Fahrzeugs hinterlegt werden.

In einer weiteren möglichen Ausgestaltung des vorgestellten Verfahrens ist vorgesehen, dass die Verbindungseinstellungen zum Übertragen der Nachricht an die tragbare Recheneinheit des Nutzers des Fahrzeugs unter Verwendung eines aus einem Speicher des Fahrzeugs ausgelesenen Identifizierungsmerkmals über eine Kommunikationsschnittstelle von einem Server abgefragt werden.

Mittels eines als Datenbank zum Ermitteln von Verbindungseinstellungen zum Kontaktieren eines Nutzers eines Fahrzeugs ausgestalteten Servers, kann eine zentrale Einrichtung bereitgestellt werden, auf die bspw. lediglich vorgegebene Nutzer Zugriff haben, und durch die jeweilige Abfragen von Nutzern protokolliert werden können, wodurch ein Missbrauch der Verbindungseinstellungen verhindert wird.

In einer weiteren möglichen Ausgestaltung des vorgestellten Verfahrens ist vorgesehen, dass mittels der an die tragbare Recheneinheit des Nutzers übermittelten Nachricht mindestens eine Option zum Erzeugen des Steuerbefehls zum Lösen der Verriegelung und Informationen über einen aktuellen Füllstand eines Energiespeichers des Fahrzeugs an die tragbare Recheneinheit des Nutzers übertragen werden.

Um einem Nutzer eines Fahrzeugs, der eine erfindungsgemäß vorgesehene Nachricht übermittelt bekommt, eine Hilfe bei der Entscheidung, ob er die Verriegelung zum Fixieren der Versorgungsleitung an dem Fahrzeug freigeben soll, bereitzustellen, kann dem Nutzer ein aktueller Ladezustand bzw. ein aktueller Füllstand eines Energiespeichers des Fahrzeugs angezeigt werden bzw. zusammen mit der erfindungsgemäß vorgesehenen Nachricht übermittelt werden.

In einer weiteren möglichen Ausgestaltung des vorgestellten Verfahrens ist vorgesehen, dass an dem Fahrzeug ein Anzeigeelement angeordnet ist, und das Anzeigeelement für den Fall, dass die Verriegelung gelöst wurde, von einem ersten Zustand in einen zweiten Zustand geschaltet wird, der dem anfragenden Nutzer das Lösen der Verriegelung anzeigt.

Um einem jeweiligen anfragenden Nutzer eine Rückmeldung über eine erfolgreich an einen Nutzer eines eine jeweilige Versorgungsleitung blockierenden Fahrzeugs bereitzustellen, kann es vorgesehen sein, dass eine erfolgreiche Übertragung der erfindungsgemäß vorgesehenen Nachricht mittels eines Anzeigeelements, wie bspw. einer Leuchte oder einem akustischen Element rückgemeldet wird. Bspw. kann eine Leuchte in einen leuchtenden oder blinkenden Zustand geschaltet oder ein Lautsprecher in einen Zustand geschaltet werden, in dem der Lautsprecher einen Ton erzeugt, wenn die erfindungsgemäß vorgesehene Nachricht erfolgreich an den Nutzer des Fahrzeugs übertragen wurde und/oder wenn der Nutzer den erfindungsgemäß vorgesehenen Steuerbefehl zum Lösen der Verriegelung bereitgestellt hat.

Ferner betrifft die vorgestellte Erfindung ein System zum Verwalten einer Versorgungsleitung einer Versorgungsstation zum Versorgen eines Fahrzeugs mit Energie, mit einem Sender und einer tragbaren Recheneinheit eines Nutzers eines Fahrzeugs, wobei der Sender dazu konfiguriert ist, in Abhängigkeit einer Anfrage eines anfragenden Nutzers eine Nachricht an die tragbare Recheneinheit des Nutzers des Fahrzeugs zu übermitteln. Dabei ist vorgesehen, dass die Nachricht eine Option zum Erzeugen eines Steuerbefehls zum Lösen einer Verriegelung zum Fixieren der Versorgungsleitung an dem Fahrzeug umfasst. Weiterhin ist vorgesehen, dass die tragbare Recheneinheit dazu konfiguriert ist, für den Fall, dass der Nutzer des Fahrzeugs die Option zum Erzeugen des Steuerbefehls zum Lösen der Verriegelung aktiviert, einen Steuerbefehl zum Lösen der Verriegelung zu erzeugen und den Steuerbefehl an das Fahrzeug zu übertragen, und wobei das Fahrzeug ein Steuergerät umfasst, das dazu konfiguriert ist, in Abhängigkeit eines Empfangs des von der tragbaren Recheneinheit des Nutzers des Fahrzeugs zu erzeugenden Steuerbefehls, die Verriegelung an dem Fahrzeug zu lösen, wodurch die Versorgungleitung durch den anfragenden Nutzer von dem Fahrzeug zu lösen ist.

Das vorgestellte System dient insbesondere zur Durchführung des vorgestellten Verfahrens.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.

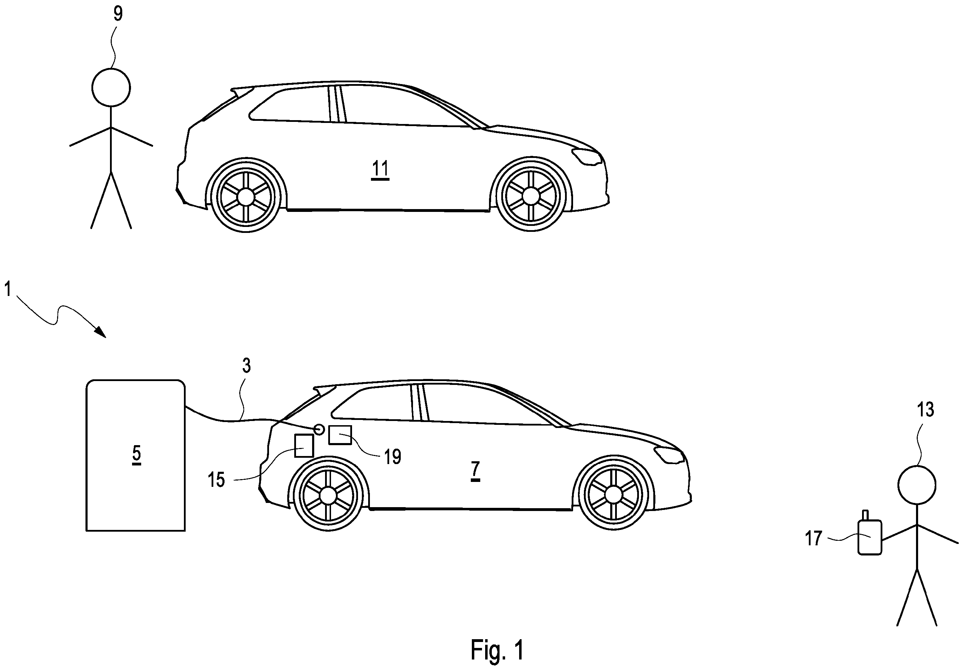

Figur 1 zeigt eine schematische Darstellung einer möglichen Ausgestaltung des erfindungsgemäßen Systems.

In Figur 1 ist ein System 1 zum Verwalten einer Versorgungsleitung 3 einer Versorgungsstation 5 zum Versorgen eines Fahrzeugs 7 mit Energie dargestellt.

Vorliegend ist die Versorgungsleitung 3 der Versorgungsstation 5 durch das Fahrzeug 7 blockiert, so dass ein anfragender Nutzer 9 sein Fahrzeug 11 nicht laden kann. Da ein Nutzer 13 des Fahrzeugs 7 nicht in unmittelbarer Nähe des Fahrzeugs 7 verfügbar ist, kann der anfragende Nutzer 9 den Nutzer 13 des Fahrzeugs 7 nicht verbal kontaktieren und um eine Freigabe der Versorgungsstation bitten.

Um dem Nutzer 13 des Fahrzeugs 7 eine Nachricht mit der Bitte um Freigabe der Versorgungsleitung 3 zu übermitteln, betätigt der anfragende Nutzer 9 einen an dem Fahrzeug 7 angeordneten Taster 15, woraufhin ein Steuergerät des Fahrzeugs 7 dem Nutzer 13 des Fahrzeugs 7 eine Nachricht auf eine tragbare Recheneinheit 17 sendet. Die Nachricht umfasst ein Steuerungssymbol zum Bereitstellen eines Steuerbefehls, der dazu führt, dass eine Verriegelung 19 zum Fixieren der Versorgungsleitung 3 an dem Fahrzeug 7 gelöst wird.

Vorliegend betätigt der Nutzer 13 des Fahrzeugs 7 das Steuerungssymbol der Nachricht, woraufhin der Steuerbefehl von der tragbaren Recheneinheit 17 erzeugt und an das Fahrzeug 7 übertragen wird. In Reaktion auf einen Empfang des Steuerbefehls wird ein Steuergerät des Fahrzeugs 7 dazu konfiguriert, die Verriegelung 19 zum Fixieren der Versorgungsleitung 3 an dem Fahrzeug 7 zu lösen und, dadurch bedingt die Versorgungsleitung 3 für den anfragenden Nutzer 9 freizugeben und dem anfragenden Nutzer 9 ein Laden des Fahrzeugs 11 zu ermöglichen.

## Patentansprüche

1. Verfahren zum Lösen einer von einem Fahrzeug (7) umfassten Verriegelung (19) für eine Versorgungsleitung (3) zur Versorgung des Fahrzeugs (7) mit elektrischer Energie, bei dem von einem anfragenden Nutzer (9), der wegen blockierter Versorgungsleitung (3) sein Fahrzeug (11) nicht laden kann, mittels eines Senders eine Nachricht erzeugt und an eine tragbare Recheneinheit (17) eines Nutzers (13) des Fahrzeugs (7) übermittelt wird, die dem Nutzer (13) des Fahrzeugs (7) anzeigt, dass der anfragende Nutzer (9) die Versorgungsleitung (3) verwenden bzw. von dem Fahrzeug (7) lösen möchte, und bei dem mittels der Nachricht dem Nutzer (13) des Fahrzeugs (7) eine Option zum Erzeugen eines Steuerbefehls zum Lösen der Verriegelung (19) bereitgestellt wird, und bei dem für den Fall, dass der Nutzer (13) des Fahrzeugs (7) die Option zum Erzeugen des Steuerbefehls zum Lösen der Verriegelung (19) aktiviert, der Steuerbefehl zum Lösen der Verriegelung (19) erzeugt und an das Fahrzeug (7) übertragen wird, und bei dem in Abhängigkeit eines Empfangs des erzeugten Steuerbefehls durch ein Steuergerät des Fahrzeugs (7) die Verriegelung des Fahrzeugs (19) gelöst wird, wodurch dem anfragenden Nutzer (9) ein Lösen der Versorgungsleitung (3) von dem Fahrzeug (7) ermöglicht wird.

2. Verfahren nach Anspruch 1, bei dem als der Sender zum Erzeugen der Nachricht ein von dem Fahrzeug (7) umfasster Sender verwendet wird, der mittels eines an einer Außenhülle des Fahrzeugs (7) angeordneten Bedienelements (15) dazu konfiguriert wird, die Nachricht zu erzeugen und die Nachricht an die tragbare Recheneinheit (17) des Nutzers (13) des Fahrzeugs (7) zu übertragen.

3. Verfahren nach Anspruch 1, bei dem als der Sender zum Erzeugen der Nachricht eine tragbare Recheneinheit des anfragenden Nutzers (9) verwendet wird, und bei dem der anfragende Nutzer mittels des Senders mindestens ein Identifikationsmerkmal des Fahrzeugs (7) erfasst, und bei dem anhand des mindestens einen erfassten Identifikationsmerkmals auf Verbindungseinstellungen zum Übertragen der Nachricht an die tragbare Recheneinheit (17) des Nutzers (13) des Fahrzeugs (7) geschlossen wird.

4. Verfahren nach Anspruch 1, bei dem als der Sender ein von einer mit der Versorgungsleitung (3) verbundenen Versorgungsstation (5) umfasstes Steuergerät verwendet wird, und bei dem das Steuergerät der Versorgungsstation (5) in Abhängigkeit einer Betätigung eines an der Versorgungsstation angeordneten Bedienelements über eine Kommunikationsschnittstelle mit dem Fahrzeug (7) eine kommunikative Verbindung aufbaut, und bei dem von dem Steuergerät der Versorgungsstation (5) Verbindungseinstellungen zum Übertragen der Nachricht an die tragbare Recheneinheit (17) des Nutzers (13) ermittelt werden, und bei dem unter Verwendung der Verbindungseinstellungen die Nachricht von der Versorgungsstation (5) an die tragbare Recheneinheit (17) des Nutzers (13) des Fahrzeugs (7) übermittelt wird.

5. Verfahren nach Anspruch 4, bei dem die Verbindungseinstellungen zum Übertragen der Nachricht an die tragbare Recheneinheit (17) des Nutzers (13) des Fahrzeugs (7) aus einem Speicher des Fahrzeugs (7) ausgelesen werden.

6. Verfahren nach Anspruch 4, bei dem die Verbindungseinstellungen zum Übertragen der Nachricht an die tragbare Recheneinheit (17) des Nutzers (13) des Fahrzeugs (7) unter Verwendung eines aus einem Speicher des Fahrzeugs (1) ausgelesen Identifizierungsmerkmals über eine Kommunikationsschnittstelle von einem Server abgefragt werden.

7. Verfahren nach einem der voranstehenden Ansprüche, bei dem mittels der an die tragbare Recheneinheit (17) des Nutzers (13) des Fahrzeugs (7) übermittelten Nachricht mindestens eine Option zum Erzeugen des Steuerbefehls zum Lösen der Verriegelung (19) des Fahrzeugs (7) und Informationen über einen aktuellen Füllstand eines Energiespeichers des Fahrzeugs (7) an die tragbare Recheneinheit (17) des Nutzers (13) des Fahrzeugs (7) übertagen werden.

8. Verfahren nach einem der voranstehenden Ansprüche, bei dem an dem Fahrzeug (7) ein Anzeigeelement angeordnet ist, und bei dem das Anzeigeelement für den Fall, dass die Verriegelung (19) gelöst wurde, von einem ersten Zustand in einen zweiten Zustand geschaltet wird, der dem anfragenden Nutzer (9) das Lösen der Verriegelung (19) anzeigt.

9. System zum Verwalten einer Versorgungsleitung (3) einer Versorgungsstation (5) zum Versorgen eines Fahrzeugs (7, 11) mit elektrischer Energie, mit einem Sender und einer tragbaren Recheneinheit (17) eines Nutzers (13) eines Fahrzeugs (7), wobei der Sender dazu konfiguriert ist, in Abhängigkeit einer Anfrage eines anfragenden Nutzers (9), der wegen blockierter Versorgungsleitung (3) sein Fahrzeug (11) nicht laden kann, eine Nachricht an die tragbare Recheneinheit (17) des Nutzers (13) des Fahrzeugs (7) zu übermitteln, die dem Nutzer (13) des Fahrzeugs (7) anzeigt, dass der anfragende Nutzer (9) die Versorgungsleitung (3) verwenden bzw. von dem Fahrzeug (7) lösen möchte, wobei die Nachricht eine Option zum Erzeugen eines Steuerbefehls zum Lösen einer Verriegelung (19) zum Fixieren der Versorgungsleitung (3) an dem Fahrzeug (7) umfasst, und wobei die tragbare Recheneinheit (17) dazu konfiguriert ist, für den Fall, dass der Nutzer (13) des Fahrzeugs (7) die Option zum Erzeugen des Steuerbefehls zum Lösen der Verriegelung (19) aktiviert, einen Steuerbefehl zum Lösen der Verriegelung (19) zu erzeugen und den Steuerbefehl an das Fahrzeug (7) zu übertragen, und wobei das Fahrzeug (7) ein Steuergerät umfasst, das dazu konfiguriert ist, in Abhängigkeit eines Empfangs des von der tragbaren Recheneinheit (17) des Nutzers (13) des Fahrzeugs (7) zu erzeugenden Steuerbefehls, die Verriegelung (19) an dem Fahrzeug (7) zu lösen, wodurch die Versorgungleitung (3) durch den anfragenden Nutzer (9) von dem Fahrzeug (7) gelöst werden kann.

## Claims

1. Method for releasing a locking system (19), comprised by a vehicle (7), for a supply line (3) for supplying electrical energy to the vehicle (7), in which a message is generated by a requesting user (9), who is unable to charge his/her vehicle (11) due to the supply line (3) being blocked, by means of a transmitter and is transmitted to a portable computing unit (17) of a user (13) of the vehicle (7), which message indicates to the user (13) of the vehicle (7) that the requesting user (9) would like to use or release the supply line (3) from the vehicle (7), and in which, by means of the message, an option for generating a control command for releasing the locking system (19) is provided to the user (13) of the vehicle (7), and in which, in the event that the user (13) of the vehicle (7) activates the option for generating the control command for releasing the locking system (19), the control command for releasing the locking system (19) is generated and transmitted to the vehicle (7), and in which, in response to receipt of the generated control command by a control device of the vehicle (7), the locking system of the vehicle (19) is released, thereby enabling the requesting user (9) to release the supply line (3) from the vehicle (7).

2. Method according to claim 1, in which the transmitter used for generating the message is a transmitter comprised by the vehicle (7), and is configured, by means of an operating element (15) arranged on an outer shell of the vehicle (7), to generate the message and to transmit the message to the portable computing unit (17) of the user (13) of the vehicle (7).

3. Method according to claim 1, in which a portable computing unit of the requesting user (9) is used as the transmitter for generating the message, and in which the requesting user detects at least one identification feature of the vehicle (7) by means of the transmitter, and in which connection settings for transmitting the message to the portable computing unit (17) of the user (13) of the vehicle (7) are inferred on the basis of the at least one detected identification feature.

4. Method according to claim 1, in which a control device comprised by a supply station (5) connected to the supply line (3) is used as the transmitter, and in which the control device of the supply station (5) establishes a communicative connection with the vehicle (7) via a communication interface in response to actuation of an operating element arranged at the supply station, and in which the control device of the supply station (5) determines connection settings for transmitting the message to the portable computing unit (17) of the user (13), and in which the message is transmitted from the supply station (5) to the portable computing unit (17) of the user (13) of the vehicle (7) using the connection settings.

5. Method according to claim 4, in which the connection settings for transmitting the message to the portable computing unit (17) of the user (13) of the vehicle (7) are read from a memory of the vehicle (7).

6. Method according to claim 4, in which the connection settings for transmitting the message to the portable computing unit (17) of the user (13) of the vehicle (7) are retrieved from a server via a communication interface using an identification feature read from a memory of the vehicle (1).

7. Method according to any of the preceding claims, in which, by means of the message transmitted to the portable computing unit (17) of the user (13) of the vehicle (7), at least one option for generating the control command for releasing the locking system (19) of the vehicle (7) and information about a current filling level of an energy store of the vehicle (7) are transmitted to the portable computing unit (17) of the user (13) of the vehicle (7).

8. Method according to any of the preceding claims, in which a display element is arranged on the vehicle (7), and in which the display element is switched from a first state to a second state indicating to the requesting user (9) the release of the locking system (19) in the event that the locking system (19) has been released.

9. System for managing a supply line (3) of a supply station (5) for supplying electrical energy to a vehicle (7, 11), having a transmitter and a portable computing unit (17) of a user (13) of a vehicle (7), wherein the transmitter is configured, in response to a request from a requesting user (9) who is unable to charge his/her vehicle (11) due to the supply line (3) being blocked, to transmit a message to the portable computing unit (17) of the user (13) of the vehicle (7), which message indicates to the user (13) of the vehicle (7) that the requesting user (9) would like to use or release the supply line (3) from the vehicle (7), wherein the message comprises an option for generating a control command for releasing a locking system (19) for fixing the supply line (3) to the vehicle (7), and wherein the portable computing unit (17) is configured, in the event that the user (13) of the vehicle (7) activates the option for generating the control command for releasing the locking system (19), to generate a control command for releasing the locking system (19) and to transmit the control command to the vehicle (7), and wherein the vehicle (7) comprises a control device configured to release the locking system (19) on the vehicle (7) in response to receipt of the control command to be generated by the portable computing unit (17) of the user (13) of the vehicle (7), whereby the supply line (3) is released from the vehicle (7) by the requesting user (9).

## Revendications

1. Procédé pour déverrouiller un dispositif de verrouillage (19) compris par un véhicule (7) pour une conduite d'approvisionnement (3) pour l'approvisionnement du véhicule (7) en énergie électrique, dans lequel un message est généré par un utilisateur demandeur (9) qui ne peut pas charger son véhicule (11) en raison d'une conduite d'approvisionnement (3) bloquée, au moyen d'un émetteur, et est transmis à une unité de calcul portable (17) d'un utilisateur (13) du véhicule (7), qui indique à l'utilisateur (13) du véhicule (7) que l'utilisateur demandeur (9) souhaiterait utiliser ou libérer la conduite d'approvisionnement (3) du véhicule (7), et dans lequel, au moyen du message, l'utilisateur (13) du véhicule (7) a à sa disposition une option visant à générer une commande de contrôle pour libérer le dispositif de verrouillage (19), et dans lequel, dans le cas où l'utilisateur (13) du véhicule (7) active l'option visant à générer la commande de contrôle pour libérer le dispositif de verrouillage (19), la commande de contrôle pour libérer le dispositif de verrouillage (19) est générée et transmise au véhicule (7), et dans lequel le dispositif de verrouillage du véhicule (19) est libéré en fonction d'une réception de la commande de contrôle générée via un dispositif de commande du véhicule (7), de sorte que l'utilisateur demandeur (9) a la possibilité de libérer la conduite d'approvisionnement (3) du véhicule (7).

2. Procédé selon la revendication 1, dans lequel un émetteur compris par le véhicule (7), qui est configuré pour générer le message et pour transmettre le message à l'unité de calcul portable (17) de l'utilisateur (13) du véhicule (7) au moyen d'un élément de commande (15) agencé sur une enveloppe extérieure du véhicule (7), est utilisé comme émetteur pour générer le message.

3. Procédé selon la revendication 1, dans lequel une unité de calcul portable de l'utilisateur demandeur (9) est utilisée comme émetteur pour générer le message, et dans lequel l'utilisateur demandeur détecte au moins une caractéristique d'identification du véhicule (7) au moyen de l'émetteur, et dans lequel des paramètres de connexion pour transmettre le message à l'unité de calcul portable (17) de l'utilisateur (13) du véhicule (7) sont déduits sur la base de l'au moins une caractéristique d'identification détectée.

4. Procédé selon la revendication 1, dans lequel un dispositif de commande d'une station d'approvisionnement (5) connectée à la conduite d'approvisionnement (3) est utilisé comme émetteur, et dans lequel l'unité de commande de la station d'approvisionnement (5) établit une interface de communication avec le véhicule (7) par l'intermédiaire d'une interface de communication en fonction d'un actionnement d'un élément de commande agencé au niveau de la station d'approvisionnement, et dans lequel le dispositif de commande de la station d'approvisionnement (5) détermine des paramètres de connexion pour transmettre le message à l'unité de calcul portable (17) de l'utilisateur (13), et dans lequel le message est transmis de la station d'approvisionnement (5) à l'unité de calcul portable (17) de l'utilisateur (13) du véhicule (7) en utilisant les paramètres de connexion.

5. Procédé selon la revendication 4, dans lequel les paramètres de connexion pour transmettre le message à l'unité de calcul portable (17) de l'utilisateur (13) du véhicule (7) sont lus à partir d'une mémoire du véhicule (7).

6. Procédé selon la revendication 4, dans lequel les paramètres de connexion pour transmettre le message à l'unité de calcul portable (17) de l'utilisateur (13) du véhicule (7) sont recherchés par un serveur en utilisant une caractéristique d'identification lue à partir d'une mémoire du véhicule (1) via une interface de communication.

7. Procédé selon l'une quelconque des revendications précédentes, dans lequel au moins une option visant à générer la commande de contrôle pour libérer le dispositif de verrouillage (19) du véhicule (7) et des informations sur un niveau de remplissage actuel d'un réservoir d'énergie du véhicule (7) sont transmises à l'unité de calcul portable (17) de l'utilisateur (13) du véhicule (7) au moyen du message transmis à l'unité de calcul portable (17) de l'utilisateur (13) du véhicule (7)

8. Procédé selon l'une quelconque des revendications précédentes, dans lequel un élément d'affichage est agencé sur le véhicule (7), et dans lequel l'élément d'affichage est commuté d'un premier état à un second état qui indique la libération du dispositif de verrouillage (19) à l'utilisateur demandeur (9) dans le cas où le dispositif de verrouillage (19) a été libéré.

9. Système pour gérer une conduite d'approvisionnement (3) d'une station d'approvisionnement (5) pour approvisionner un véhicule (7, 11) en énergie électrique, avec un émetteur et une unité de calcul portable (17) d'un utilisateur (13) d'un véhicule (7), dans lequel l'émetteur est configuré pour transmettre, en fonction d'une demande d'un utilisateur demandeur (9) qui ne peut pas charger son véhicule (11) en raison d'une conduite d'approvisionnement (3) bloquée, un message à l'unité de calcul portable (17) de l'utilisateur (13) du véhicule (7) qui indique à l'utilisateur (13) du véhicule (7) que l'utilisateur demandeur (9) souhaiterait utiliser ou libérer la conduite d'approvisionnement (3) du véhicule (7), dans lequel le message comprend une option visant à générer une commande de contrôle pour libérer un dispositif de verrouillage (19) pour fixer la conduite d'approvisionnement (3) au véhicule (7), et dans lequel l'unité de calcul portable (17) est configurée pour, dans le cas où l'utilisateur (13) du véhicule (7) active l'option visant à générer la commande de contrôle pour libérer le dispositif de verrouillage (19), générer une commande de contrôle pour libérer le dispositif de verrouillage (19) et transmettre la commande de contrôle au véhicule (7), et dans lequel le véhicule (7) comprend un dispositif de commande qui est configuré pour libérer le dispositif de verrouillage (19) sur le véhicule (7) en fonction d'une réception de la commande de contrôle devant être générée par l'unité de calcul portable (17) de l'utilisateur (13) du véhicule (7), moyennant quoi la conduite d'approvisionnement (3) peut être libérée du véhicule (7) par l'utilisateur demandeur (9).
